# EUROPEAN PATENT APPLICATION

(11) **EP 4 589 158 A1**
(43) Date of publication of application: **23.07.2025**
(21) Application number: 23865043.6
(22) Date of filing: 05.07.2023
(51) Int. Cl.: F16B 37/12, F16B 33/02, F16B 37/00

(54) **INSERT NUT AND DEVICE**

(30) Priority: 13.09.2022 JP 2022145306
(71) Applicant: Advanex Inc., Tokyo 114-8581 (JP)
(72) Inventor: NEMOTO, Kazuyoshi, Tokyo 101-0045 (JP); SUGAWARA, Hideharu, Tokyo 101-0045 (JP); ONISHI, Hirokazu, Tokyo 114-8581 (JP); KAKU, Seiji, Tokyo 114-8581 (JP); NAGAI, Tomohiro, Honjo-shi, Saitama 367-0063 (JP)
(74) Representative: DREISS Patentanwälte PartG mbB
(86) International application number: PCT/JP2023/024921
(87) International publication number: WO 2024/057681

(57) **Abstract**

[Problem to be Solved]

To provide an insert nut that adequately addresses an issue of cutting debris.

[Solution]

An insert nut in cylindrical shape, which has an outer surface portion 150 formed with a screw portion and multiple recesses 160 that accommodate cutting debris generated when an insert nut body is screwed into an embedded target through the screw section in a threaded manner.

## Description

### [Technical Field]

The present invention relates to an insert nut and a device, more particularly to an insert nut that can be embedded in various resin products, such as those used in semiconductor processing equipment and automobiles, as well as to various devices, including such as semiconductor processing equipment and automotive devices, that feature embedding targets in which the insert nut is embedded.

### [Background Art]

Patent Document 1 discloses an insert nut that is cylindrical, having a tapping screw portion on an outer peripheral surface and an internal screw portion on an inner peripheral surface, designed to be embedded in plastic.
[Patent Document 1] Japanese Provisional Patent Publication No. 1997-96308

### [Disclosure of the Invention]

### [Problems to be Solved by the Invention]

However, the insert nut disclosed in Patent Document 1 generates debris when the insert nut is press-fitted into a resin molded article (plastic) in a threaded manner.

Insert nuts are also used in devices that are required to operate in clean environments, such as semiconductor wafer processing equipment. Such devices include polishing devices. The polishing devices are equipped with a platen that holds a semiconductor wafer and a pad connected to the platen to prevent damage to the semiconductor wafer, and the insert nuts are used to connect the platen and the pad.

If debris remains in a gap between the insert nut and the resin molded article, the debris may appear on the pad due to vibrations or other factors during the use of the semiconductor wafer processing equipment. Such debris may adhere to the semiconductor wafer or otherwise hinder the desired semiconductor wafer processing. Therefore, if debris countermeasures cannot be adequately implemented, the types of devices in which the insert nut can be used will be limited.

Accordingly, the present invention aims to provide an insert nut that adequately addresses the issue of debris.

### [Means to Resolve the Problems]

To solve the above-identified problem, the insert nut of the present invention is in a substantially cylindrical shape, with an outer surface portion provided with an external thread portion and a plurality of recesses formed to accommodate debris generated when the insert nut body is press-fitted into the embedding target in a threaded manner via the external thread portion.

A tapered portion that tapers from a base end toward a tip end may be formed on the insert nut adjacent to at least one end of the outer surface portion.

A flange portion, such as a ring-shaped flange, may be integrally provided at one end of the outer surface portion of the insert nut.

Furthermore, the device of the present invention includes an embedding target in which any of the above-described insert nuts is embedded.

### [Embodiments]

Hereinafter, the insert nut 100 according to the embodiments of the present invention will be described with reference to the drawings. In the drawings, the same reference numerals are used for similar parts.

### (Embodiment 1)

Figure 1 is a schematic perspective view of the insert nut 100 according to Embodiment 1 of the present invention.

Figure 2 is a front view of the insert nut 100 shown in Figure 1.

Figure 3 is a right side view of the insert nut 100 shown in Figure 1.

Figure 4 is a left side view of the insert nut 100 shown in Figure 1.

Figure 5 is a top view of the insert nut 100 shown in Figure 1.

Figure 6 is a bottom view of the insert nut 100 shown in Figure 1.

Figure 7 is a rear view of the insert nut 100 shown in Figure 1.

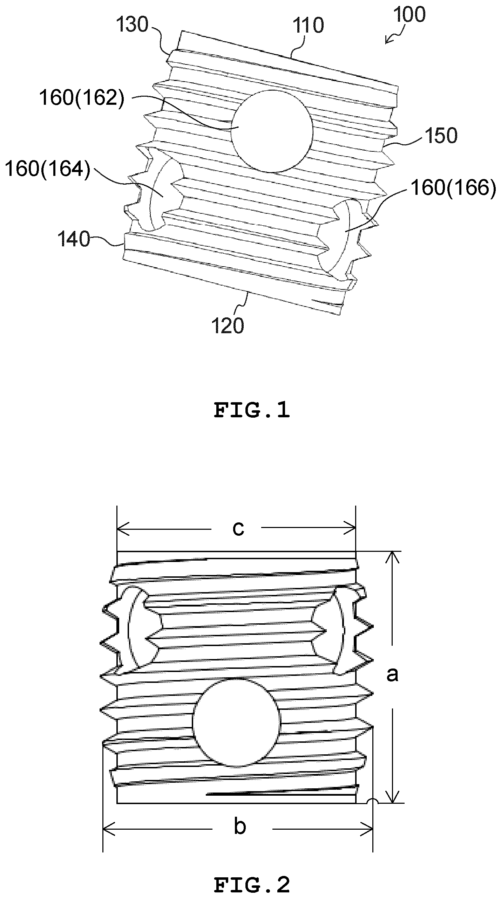

Here, each part of the insert nut 100 described below is labeled with numerical symbols in Figure 1, while alphabetic symbols are used in Figures 2 through Figure 7 for the purpose of dimensional explanations, which will be described later.

The insert nut 100 shown such as in Figure 1 is in a substantially cylindrical shape. The insert nut 100 is a nut that can be embedded into embedding targets such as resin-molded products. Specifically, a round hole with an inner diameter slightly smaller than the outer diameter of the insert nut 100 is formed in the embedding target, and the insert nut 100 can be embedded by screwing into the round hole.

The insert nut 100 may be made of materials such as iron, aluminum, brass, stainless steel, free-cutting steel, titanium, or other materials, with no particular limitation on the material. However, the hardness of the insert nut 100 must be higher than the hardness of the embedding target.

As shown in Figure 1 and others, the insert nut 100 has a first end portion 110 located at one end and a second end portion 120 located at the other end. The first end portion 110 and the second end portion 120 can be substantially identical in shape, as shown in Figure 1 and others, where the insert nut 100 can be screwed into the circular hole of the embedding target from either the first end portion 110 or the second end portion 120.

It should be noted that some insert nuts have a flange portion, which is a ring shape and extends in a circumferential direction relative to the insert nut body, integrally formed at one end of the insert nut. For the insert nut 100 in Figure 1, the flange portion can also be provided at either the first end portion 110 or the second end portion 120.

However, in the case of the insert nut with the flange portion, the insert nut cannot be screwed into the circular hole of the embedding target from the flange side. Nevertheless, the flange portion prevents debris generated from the inner wall of the circular hole during the screwing of the insert nut into the embedding target from appearing on the surface of the embedding target due to vibrations or other factors during a use of the embedding target.

Additionally, a first tapered portion 130 that is tapering from the base end toward the tip end of the first end portion 110 and a second tapered portion 140 that is tapering from the base end toward the tip end of the second end portion 120 are formed adjacent to the first end portion 110 and the second end portion 120 respectively. Accordingly, the tapered portions facilitate the alignment of the insert nut 100 with the circular hole of the embedding target.

It should be noted that it is not mandatory to form one or both of the first tapered portion 130 and the second tapered portion 140. In particular, when the flange portion is provided at either the first end portion 110 or the second end portion 120, it is not essential to form a tapered portion on the flange side.

Between the first tapered portion 130 and the second tapered portion 140, an outer surface portion 150 is located. On the outer surface portion 150, for example, as is known, threading processes such as cutting process are performed to form an external thread portion composed of thread crests and thread roots. Additionally, on the inner cylindrical side of the insert nut 100, an internal thread portion required for engagement with a bolt (not shown in the figures) is formed by rolling or other methods.

Furthermore, between the first tapered portion 130 and the second tapered portion 140 on the outer surface portion 150, a plurality of recesses 160 are formed to accommodate resin debris generated during the screwing of the insert nut 100 into the circular hole of the embedding target.

The recesses 160 collectively refer to a first recess 161, a second recess 162, and so on. In Figure 1, among the six recesses 160, the second recess 162, the fourth recess 164, and the sixth recess 166 are shown.

The number, position, size, range, and shape of the recesses 160 are not limited, and the recess 160 is sufficient as long as the insert nut 100 has adequate pull-out strength to prevent detachment from the circular hole and provides enough volume to accommodate the resin debris. However, it should be noted that not all debris must necessarily be accommodated within the recesses 160, and some of the debris can also be accommodated in the gaps between the thread roots of the external thread portion formed on the outer surface portion 150 near the recesses 160 and the circular hole.

In this embodiment, the insert nut 100 is designed so that the total volume of the gaps and the recesses 160 (gap volume and recess volume) is approximately 1.3 times or more than the amount of debris generated. Additionally, the pull-out strength of the insert nut 100 should correspond to the size of the insert nut 100 but exceed the pull-out strength of existing commercially available products. While Figure 1 and others illustrate substantially cylindrical recesses 160 of the same size and shape, it is not mandatory to make the recesses 160 uniform in size or shape.

Furthermore, in Figure 1 and others, six recesses 160 are shown, with three each on the first tapered portion 130 side and the second tapered portion 140 side, formed at equal intervals; however, the recesses 160 is not mandatory. The recesses 160 can be formed, for example, by drilling pilot holes.

The insert nut 100 shown in Figure 1 and others is planned to be available in multiple sizes to match the sizes of screws to be engaged with. The dimensions of the insert nut 100 and the components of the same are exemplified for the type of screw known as M4 × 0.7, but the dimensions are not limited to this example and are described below.

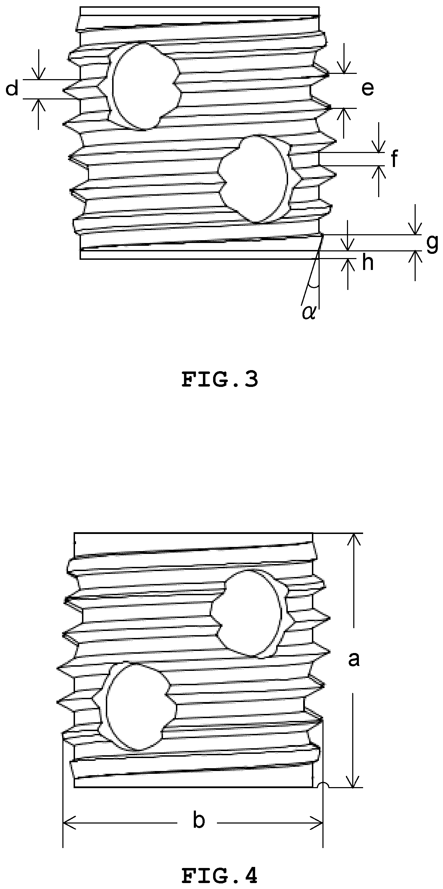

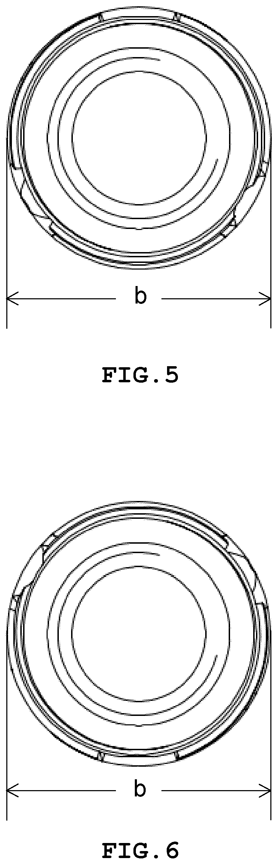

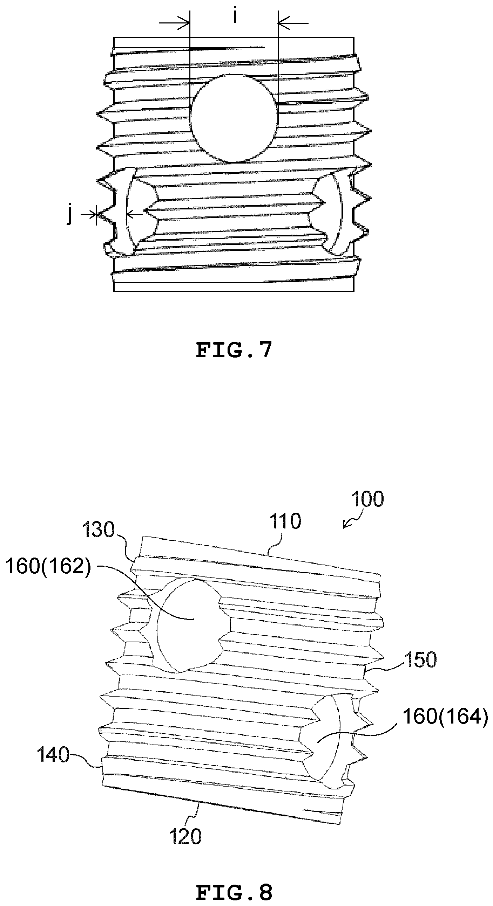

The insert nut 100 has the following dimensions:
- an overall height a: 6.0 mm (Figure 2);
- from the first end portion 110 to the second end portion 120: diameter, c = 5.70 mm (Figure 2) and height (lead-in length), h = 0.20 mm (Figure 3);
- from the first tapered portion 130 to the second tapered portion 140: median length from the base end to the tip end (lead-in angle portion length), g = 0.40 mm (Figure 3) and an angle (lead-in angle) relative to the axial direction of the insert nut 100, α = 15.0° (Figure 3);
- the outer surface portion 150: outer diameter, b: 6.50 mm (Figure 5), inner diameter, c: 5.70 mm (Figure 2), thread width, d = 0.45 mm (which is also the same as the thread height) (Figure 3), thread crest-to-crest pitch, e = 0.80 mm (Figure 3), and thread root-to-root pitch = 0.35 mm (Figure 3); and
- the recessed portion 160: each diameter (hole diameter), i = 2.10 mm (Figure 7), depth (hole depth) from the top of each thread to the bottom of each hole, j = 0.90 mm (Figure 7), thickness (hole position thickness) from the bottom of each hole to the inner wall = 0.35 mm, and total volume = 8.00 mm³.

When the insert nut 100 with the-above specifications is screwed into the round hole with a diameter of 6.0 mm, opened in the resin embedding target made of polyphenylene sulfide (Tectron 1000 PPS sheet, manufactured by Mitsubishi Chemical Advanced Materials), the volume of generated debris is approximately 4.36 mm³.

The total volume of the recesses 160 is more than 1.83 times the volume of the debris generated, ensuring sufficient accommodation of the debris in the recesses 160 and the gaps between the thread roots of the external thread portion on the outer surface portion 150 near the recesses 160 and the circular hole. Furthermore, the pull-out strength of the insert nut 100, with the dimensions of the respective portion exemplified above, is approximately 3500 N.

Accordingly, the insert nut 100 of this embodiment can be used in fields requiring a clean operating environment, such as semiconductor wafer processing equipment, without the risk of resin debris adhering to semiconductor wafers during use.

Figure 8 is a perspective view showing a modified example of the insert nut 100 shown in Figure 1. The insert nut 100 shown in Figure 8 differs from the insert nut 100 in Figure 1 in terms of the positions, number, and sizes of the recesses 160.

In the insert nut 100 shown in Figure 8, a total of four recesses 160 are formed. Among the four recesses 160, the second recess 162 and the fourth recess 164, whose axes are mutually orthogonal, are shown in Figure 8. The first recess 161 and the third recess 163, which are not visible in Figure 8, are formed on the same axes as the second recess 162 and the fourth recess 164.

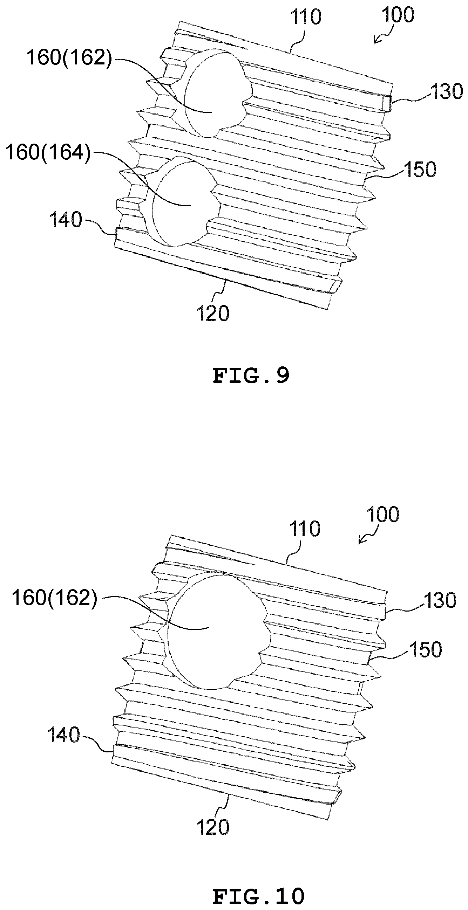

Figure 9 is a perspective view showing another modified example different from the insert nut 100 shown in Figure 8. In the insert nut 100 shown in Figure 9, a total of four recesses 160 are also formed, but the positions of the recesses 160 differ from those in the insert nut 100 shown in Figure 8.

In Figure 9, the second recess 162 and the fourth recess 164, whose axes extend parallel to each other, are shown. The first recess 161 and the third recess 163, which are not visible in Figure 9, are formed on the same axes as the second recess and the fourth recess 164.

The insert nut 100 shown in Figures 8 and 9, for example, may have a recessed portion 160 of the M4 × 0.7 type with a hole diameter of 2.60 mm, a hole depth of 0.90 mm, and a hole position thickness of 0.35 mm. In this case, the total volume of the recessed portion 160 becomes 8.08 mm³, which is slightly more than 1.85 times the volume of debris of 4.36 mm³, and the pull-out strength is approximately 3600 N.

Figure 10 is a perspective view showing another modified example of the insert nut 100 shown in Figure 1. The insert nut 100 shown in Figure 10 has two recesses 160. Even in this case, for example, regarding the first recess 161 to the second recess 162 of type M4 × 0.7, the hole diameter may be adjusted to 3.10 mm, the hole depth to 0.90 mm, and the hole position thickness to 0.35 mm, making the total volume 7.71 mm³. This is more than 1.76 times the volume of debris of 4.36 mm³, while achieving the pull-out strength of approximately 3500 N or more.

The number and size of the recesses 160, as described above, are not strictly limited; however, increasing the number or size excessively to secure the sufficient pull-out strength is not preferable. Moreover, if the number of recesses 160 is excessively increased, the time required to form the recesses 160 becomes longer, thereby reducing the manufacturing throughput of the insert nut 100.

If the insert nut 100 is screwed in with resin debris trapped in the gap between the external thread portion of the nut and the circular hole of the embedding target, the debris may cause excessive cutting of the embedding target. As a result, a large gap between the insert nut 100 and the embedding target is created, potentially leading to looseness. Therefore, it is advisable to provide an appropriate number of recesses 160, reducing the distance between the recesses 160 so that the distance for the debris to reach the recesses 160 is reduced.

The number and size (opening area or volume) of the recesses 160 should be considered as a trade-off. This approach helps mitigate the risk of looseness without reducing pull-out strength.

In summary, as long as the condition of forming the recessed portion 160 between the first tapered portion 130 and the second tapered portion 140 on the outer surface portion 150 is satisfied, the position, number, and size of the recessed portions 160 are not strictly limited; however, as a general guideline, it is recommended to have 2 to 6 recessed portions 160 arranged at equal intervals.

### (Embodiment 2)

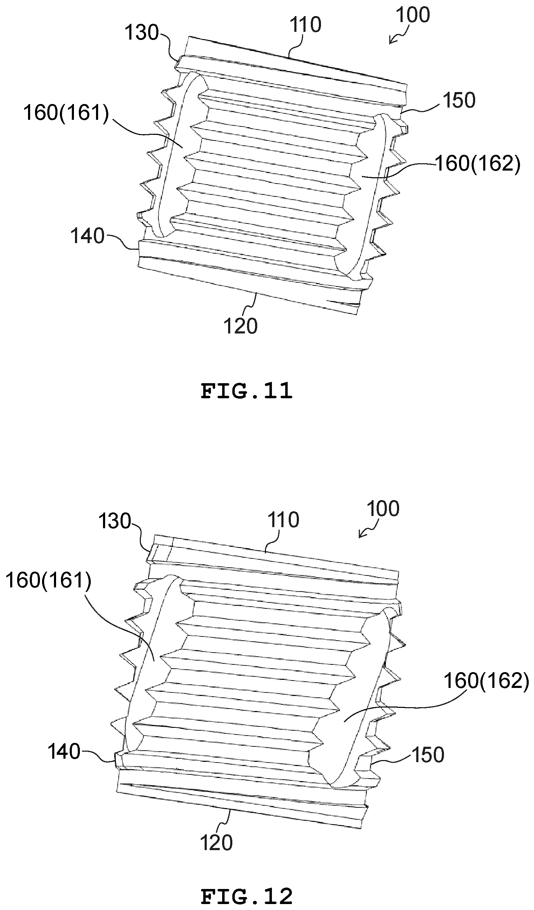

Figure 11 is a schematic perspective view of the insert nut 100 of Embodiment 2 of the present invention, corresponding to Figure 1. The insert nut 100 shown in Figure 11 has three recesses 160, which differ in shape compared to the recesses 160 in Figure 1.

Specifically, the insert nut 100 shown in Figure 11 includes a first recess 161 and a second recess 162, which are visible in Figure 11, and a third recess 163, which is not visible in Figure 11, and all of these recesses are elongated in shape.

For example, in the case of the M4 × 0.7 type of recess 160, each hole diameter is approximately 1.60 mm in terms of equivalent diameter, a depth (hole depth) from the top of each thread to the bottom of each hole is 0.60 mm, and a thickness (hole position thickness) from the bottom of each hole to the inner wall is 0.65 mm, thereby the total volume becoming 8.27 mm³. Accordingly, the volume here is approximately 1.89 times the volume of debris of 4.36 mm³. Additionally, the pull-out strength is approximately 3500 N.

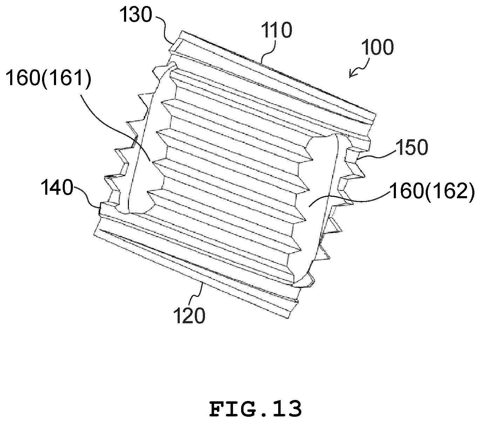

Figures 12 and 13 show modified examples of the insert nut 100 depicted in Figure 11. The insert nut 100 shown in Figure 12 differs in that the longitudinal direction of each recess 160 is inclined.

In the insert nut 100 shown in Figures 12 and 13, the inclination of each recess 160 allows the debris to enter at an angle relative to the inner wall of the first recess 160, providing an advantage of reducing the likelihood of obstruction during debris accommodation.

Table 1 provides examples of the dimensions and other details of the recessed portion 160 for cases where there are six recessed portions 160 of approximately cylindrical in shape as shown in Figure 1 at every screw size ranging from M3 to M16 for the insert nut 100 to be screwed in. The previously described dimensions and other details for the M4 size are also included in this table.

**[Table 1]**

| Screw Size | Hole Diameter | Hole Depth | Hole Position Thickness | Hole Volume | Gap Volume | Debris | Pull-out Strength |
|---|---|---|---|---|---|---|---|
| | mm | mm | mm | mm^3 | mm^3 | mm^3 | N |
| M3 | 1.90 | 0.70 | 0.30 | 3.59 | 0.81 | 2.14 | 1,700 |
| M3.5 | 2.00 | 0.90 | 0.35 | 5.12 | 1.55 | 3.40 | 2,700 |
| M4 | 2.10 | 0.90 | 0.35 | 6.17 | 1.83 | 4.36 | 3,500 |
| M5 | 2.90 | 1.00 | 0.50 | 12.04 | 2.65 | 8.20 | 5,500 |
| M6 | 3.20 | 1.20 | 0.80 | 17.55 | 5.23 | 13.16 | 7,600 |
| M8 | 4.20 | 1.50 | 0.50 | 36.90 | 9.91 | 29.63 | 9,200 |
| M10 | 5.00 | 1.60 | 0.40 | 59.08 | 10.12 | 44.78 | 12,600 |
| M12 | 6.20 | 1.60 | 0.40 | 79.90 | 20.85 | 65.57 | 17,500 |
| M14 | 6.70 | 1.60 | 0.40 | 91.11 | 28.16 | 76.92 | 23,500 |
| M16 | 7.60 | 1.60 | 0.40 | 113.96 | 36.03 | 99.39 | 27,000 |

In Table 1, the total volumes of the "hole volume" and "gap volume" for each example are at least 1.3 times the corresponding "debris" volume. Additionally, the pull-out strengths in all cases are superior to the pull-out strengths of commercially available products.

Table 2 provides examples of dimensions and other details for cases where the insert nut 100, screwed with screws of sizes M3 to M16, has four approximately cylindrical recesses 160, as shown in Figure 8. The table also includes the dimensions for the M4 size mentioned earlier.

**[Table 2]**

| Screw Size | Hole Diamet er | Hole Depth | Hole Position Thickne ss | Hole Volume | Gap Volume | Debris | Pull-out Strengt h |
|---|---|---|---|---|---|---|---|
| | mm | mm | mm | mm^3 | mm^3 | mm^3 | N |
| M3 | 2.30 | 0.70 | 0.30 | 3.33 | 1.11 | 2.14 | 1,000 |
| M3.5 | 2.30 | 0.90 | 0.35 | 4.42 | 2.02 | 3.40 | 2,900 |
| M4 | 2.60 | 0.90 | 0.35 | 5.56 | 2.52 | 4.36 | 3,600 |
| M5 | 3.30 | 1.10 | 0.40 | 11.75 | 3.06 | 8.20 | 5,500 |
| M6 | 3.30 | 1.40 | 0.60 | 15.79 | 6.08 | 13.16 | 7,600 |
| M8 | 4.80 | 1.60 | 0.40 | 34.66 | 12.78 | 29.63 | 9,750 |
| M10 | 6.10 | 1.60 | 0.40 | 55.20 | 15.37 | 44.78 | 13,700 |
| M12 | 7.60 | 1.60 | 0.40 | 72.18 | 28.50 | 65.57 | 19,000 |
| M14 | 8.20 | 1.60 | 0.40 | 82.23 | 38.22 | 76.92 | 23,000 |
| M16 | 9.40 | 1.60 | 0.40 | 102.53 | 49.13 | 99.39 | 27,000 |

In Table 2, the total volumes of the "hole volume" and "gap volume" for each example are at least 1.3 times the corresponding "debris" volume. Furthermore, the pull-out strengths in all cases exceed those of commercially available products.

Table 3 provides examples of dimensions and other details of the recessed portion 160 for cases where there are three recessed portions 160 of elongated recesses 160 as shown in Figure 11 at every screw size ranging from M3 to M16 for the insert nut 100 to be screwed in. The previously described dimensions and other details for the M4 size are also included in this table.

**[Table 3]**

| Screw Size | Hole Diamet er | Hole Depth | Hole Position Thickne ss | Hole Volume | Gap Volume | Debris | Pull-out Strengt h |
|---|---|---|---|---|---|---|---|
| | mm | mm | mm | mm^3 | mm^3 | mm^3 | N |
| M3 | 1.40 | 0.50 | 0.50 | 3.94 | 0.61 | 2.14 | 1,950 |
| M3.5 | 1.50 | 0.60 | 0.65 | 5.57 | 1.14 | 3.40 | 2,850 |
| M4 | 1.60 | 0.60 | 0.65 | 6.89 | 1.38 | 4.36 | 3,500 |
| M5 | 1.90 | 0.70 | 0.80 | 13.30 | 1.61 | 8.20 | 5,500 |
| M6 | 2.20 | 0.80 | 1.20 | 19.21 | 3.62 | 13.16 | 7,500 |
| M8 | 2.30 | 1.10 | 0.90 | 42.57 | 5.51 | 29.63 | 9,750 |
| M10 | 2.70 | 1.10 | 0.90 | 64.95 | 6.61 | 44.78 | 13,000 |
| M12 | 3.00 | 1.20 | 0.80 | 90.91 | 10.54 | 65.57 | 18,500 |
| M14 | 3.10 | 1.20 | 0.80 | 107.43 | 13.76 | 76.92 | 24,000 |
| M16 | 3.50 | 1.20 | 0.80 | 138.06 | 17.94 | 99.39 | 27,000 |

In Table 3, the total volumes of the "hole volume" and "gap volume" for each example are at least 1.3 times the corresponding "debris" volume. Additionally, the pull-out strengths in all cases surpass the pull-out strengths of commercially available products.

As described above, this embodiment illustrates various embodiments of the insert nut 100. However, the insert nuts of the present invention are not limited to the embodiments provided herein. The scope of the invention includes the insert nuts defined in the claims and the equivalents of the claims.

Furthermore, the insert nuts of the present invention can be embedded in various resin products used in semiconductor processing devices, automobiles, and other applications, and the device in the present invention includes an embedding target for embedding the insert nuts. If specific examples of the devices in the present invention are provided, for example, the devices include retainer rings, platens, and pads that are used for positioning semiconductor wafers while performing various processes, such as chemical mechanical polishing (CMP), on the semiconductor wafers and automotives that includes various types of resin products.

### [Brief Description of the Drawings]

[Figure 1] Figure 1 is a schematic perspective view of the insert nut 100 in Embodiment 1 of the present invention.
[Figure 2] Figure 2 is a front view of the insert nut 100 shown in Figure 1.
[Figure 3] Figure 3 is a right side view of the insert nut 100 shown in Figure 1.
[Figure 4] Figure 4 is a left side view of the insert nut 100 shown in Figure 1.
[Figure 5] Figure 5 is a top view of the insert nut 100 shown in Figure 1.
[Figure 6] Figure 6 is a bottom view of the insert nut 100 shown in Figure 1.
[Figure 7] Figure 7 is a rear view of the insert nut 100 shown in Figure 1.
[Figure 8] Figure 8 is a perspective view illustrating a variation of the insert nut 100 shown in Figure 1.
[Figure 9] Figure 9 is a perspective view illustrating another variation of the insert nut 100 different from that shown in Figure 8.
[Figure 10] Figure 10 is a perspective view illustrating another variation of the insert nut 100 shown in Figure 1.
[Figure 11] Figure 11 is a schematic perspective view of the insert nut 100 in Embodiment 2 of the present invention.
[Figure 12] Figure 12 is a diagram illustrating a variation of the insert nut 100 shown in Figure 11.
[Figure 13] Figure 13 is a diagram illustrating another variation of the insert nut 100 shown in Figure 11.

### [Description of Reference Numerals]

100 - Insert nut
110 - First end portion
120 - Second end portion
130 - First tapered portion
140 - Second tapered portion
150 - Outer surface portion
160 - Recess
161 - First recess
162 - Second recess
163 - Third recess
164 - Fourth recess

## Claims

1. An insert nut having a cylindrical shape,
wherein an external screw portion is formed on an outer surface portion of the insert nut, and
a plurality of recesses is formed on an outer surface portion to accommodate cutting debris generated when the insert nut is pressed into an embedding target through an external screw portion in a threaded manner.

2. The insert nut according to Claim 1,
wherein a tapered portion, which narrows from a base end to a tip end, is formed adjacent to at least one end of the outer surface portion.

3. The insert nut according to Claim 1,
wherein a ring-shaped flange portion is integrally provided at one end of the outer surface portion.

4. A device, comprising the embedded target into which the insert nut defined in Claim 1 is embedded.
